# EUROPEAN PATENT APPLICATION

(11) **EP 1 445 147 A2**
(43) Date of publication of application: **11.08.2004**
(21) Application number: 03008910.6
(22) Date of filing: 16.04.2003
(51) Int. Cl.: B60Q 7/00

(54) **Improved warning triangle**

(30) Priority: 04.02.2003 ES 200300256
(71) Applicant: Diaz Portillo, Fernando, 18008-Granada (ES)
(72) Inventor: Diaz Portillo, Fernando, 18008-Granada (ES)
(74) Representative: Isern Jara, Nuria

(57) **Abstract**

An improved warning triangle being of the type used for the warning of imminent danger, such as a nearby broken down vehicle or an accident, working brigades, transport of goods that can bring about any type of risk, a slow vehicle, etc. This warning triangle is made up of a catadioptric triangle (1), which on the inside houses fixed or flashing lights (3), fed by a battery or similar element (5).

## Description

### OBJECT OF THE INVENTION

The object of the present application is for the Registration of a Utility Model for an improved warning triangle being of the type used for the warning of imminent danger, such as a nearby broken down vehicle or an accident, working brigades, transport of goods that can bring about any type of risk, a slow vehicle, etc.

More specifically, the warning triangle of the present invention is made up of a catadioptric triangle, which on the inside houses fixed or flashing lights, fed by a battery or similar element.

### BACKGROUND TO THE INVENTION

At the present time the warning triangles present on the market have a simple configuration; they are provided with a structure that can be dismantled so that they can be folded up for easy handling. Said triangles do not incorporate any lighting device or system to enable them to be seen more easily, making the warning of the danger more difficult, thus reducing the safety distance and increasing the possible risk of accidents.

### DESCRIPTION OF THE INVENTION

For the purpose of reducing the risk of said accident, the improved warning triangle of this invention is characterised because it is made up of a red coloured catadioptric triangle, which on the inside houses fixed or flashing lights, by means of which the chance of the danger or element to be warned of being seen is increased considerably.

Inside of the triangle, in the free space defined by the internal part of the catadioptric, a plate can be fitted or a second white or yellow-amber catadioptric can be fitted, onto which the signal of the danger to be warned against can be written or marked.

The signal also optionally has support feet on its base, which can be unfolded, for its perfect location on the verge or hard shoulder.

The supply to said fixed or flashing lights, depending on the option that the user requires, can be carried out by from the back of the signal, and can be external, either by means of plugging into the socket for the cigarette lighter, or equally by means of a battery or similar element.

Because of all of this, the triangle of the present invention considerably increases the visibility of the imminent danger, either be it a vehicle that has stopped for a breakdown or accident, for a road or main road undergoing road works, a slow vehicle or one that transports goods that presents some element of risk, etc.

There is the possibility of producing the triangle in smaller sizes that would allow for its use on the back or on rucksacks of pedestrians or cyclists, or equally the triangle can be fitted to the rear part or other part of the vehicle or obstacle to be marked. For these cases the signal would have some means of fixing.

In order to complete the description that will be made below and for the purpose of giving a greater understanding of its characteristics, this present descriptive memorandum is accompanied by a drawing, that is illustrative but not limiting, where the most significant details of the invention can be seen.

### BRIEF DESCRIPTION OF THE DESIGNS

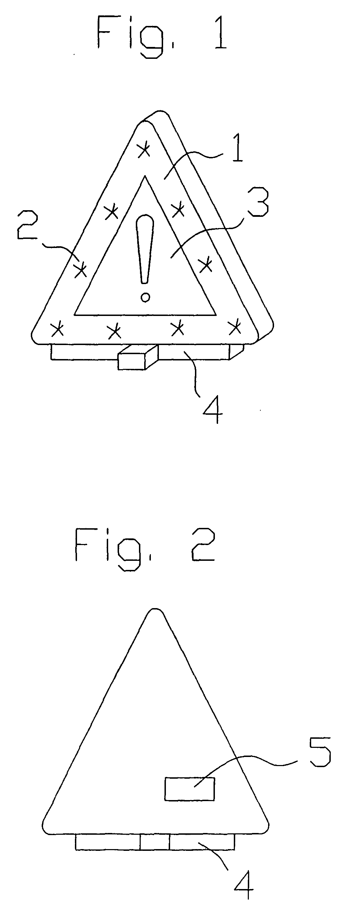

Figure 1 corresponds to a perspective view of the signal of the present invention made up of a catadioptric and an internal warning element.

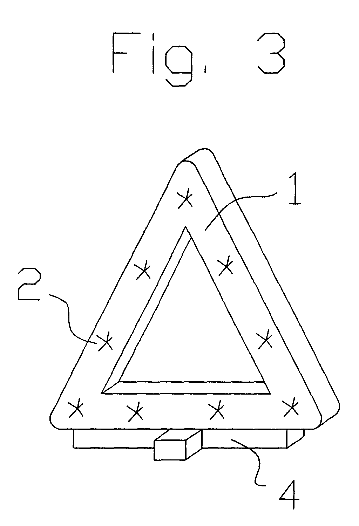

Figure 2 corresponds to an elevation view of the rear of the carcass.
Figure 3 corresponds to a perspective view of the signal made up of a catadioptric.

### DESCRIPTION OF A PREFERRED EMBODIMENT

In view of the figures commented on, and in accordance with the numbering adopted, a preferred embodiment of the invention can be seen in same that is not by way of limitation. This consists of an improved warning triangle made up of a catadioptric triangle (1) on the inside of which there are some fixed or flashing lights (2) fitted.

Inside of the triangle, in the free space defined by the internal part of the catadioptric triangle (1), a plate with a signal can be fitted or a second white or yellow-amber catadioptric (3).

The signal also has support feet (4) on its base, for its perfect location on the verge or hard shoulder.

The supply to said fixed or flashing lights is carried out by from the back of the signal, by means of a battery or similar element (5).

## Claims

1. Improved warning triangle, being of the type made up from a red-coloured catadioptric triangle (1), essentially **characterised in that** on the inside there are some fixed or flashing lights fitted (2) that increase the visibility of the danger.

2. Improved warning triangle, according to the previous claim, and in an alternative embodiment, **characterised in that** inside of the triangle, in the space defined by the internal part of the catadioptric triangle (1), a plate or a second white or yellow-amber catadioptric (3) can be fitted.

3. Improved warning triangle, according to the second claim, **characterised in that** on the inside of the plate or catadioptric (3) there is a warning marked.

4. Improved warning triangle, according to claim 1, and in an alternative embodiment, **characterised in that** the signal has some feet (4) fitted to the bottom.

5. Improved warning triangle, according to claim 1, **characterised in that** the supply to the fixed or flashing lights (2) is external to the warning triangle.

6. Improved warning triangle, according to claim 1, **characterised in that** the supply to the fixed or flashing lights (2) is fitted into the rear part of the warning triangle; and because the supply is from a battery or similar element (5).
